# FASCICULE DE BREVET EUROPEEN

(11) **EP 1 940 682 B1**
(45) Date de publication et mention de la délivrance du brevet: **25.02.2009**
(21) Numéro de dépôt: 06806842.8
(22) Date de dépôt: 26.09.2006
(51) Int. Cl.: B64D 27/26

(54) **ENSEMBLE MOTEUR POUR AERONEF**
TRIEBWERKANORDNUNG FÜR FLUGZEUG
ENGINE ASSEMBLY FOR AIRCRAFT

(30) Priorité: 29.09.2005 FR 0552953
(43) Date de publication de la demande: 09.07.2008
(73) Titulaire: AIRBUS France, 31060 Toulouse (FR)
(72) Inventeur: DIOCHON, Lionel, 31000 Toulouse (FR); CETOUT, Jean-Michel, 31100 Toulouse (FR); LAFONT, Laurent, 31320 Pechbusque (FR)
(74) Mandataire: Ilgart, Jean-Christophe
(86) Numéro de dépôt international: PCT/EP2006/066765
(87) Numéro de publication internationale: WO 2007/036527

(56) Documents cités:
- US-A- 4 266 741
- US-A- 5 497 961
- US-A- 5 746 391
- US-A1- 2004 108 413

## Description

### DOMAINE TECHNIQUE

La présente invention se rapporte de façon générale à un ensemble moteur pour aéronef, du type comprenant un turboréacteur, un mât d'accrochage, ainsi qu'une pluralité d'attaches moteur interposées entre ce mât d'accrochage et le turboréacteur.

### ÉTAT DE LA TECHNIQUE ANTÉRIEURE

De façon connue, le mât d'accrochage d'un tel ensemble moteur est prévu pour constituer l'interface de liaison entre un moteur, du type turboréacteur, et une voilure de l'aéronef équipée de cet ensemble. Il permet de transmettre à la structure de cet aéronef les efforts générés par son moteur associé, et autorise également le cheminement du carburant, des systèmes électriques, hydrauliques, et air entre le moteur et l'aéronef.

Afin d'assurer la transmission des efforts, le mât comporte une structure rigide, par exemple du type « caisson », c'est-à-dire formée par l'assemblage de longerons et de panneaux latéraux raccordés entre eux par l'intermédiaire de nervures transversales.

Un système de montage est interposé entre le moteur et la structure rigide du mât, ce système comportant globalement une pluralité d'attaches moteur, réparties habituellement en attaches avant et arrière solidaires du carter de soufflante du moteur ou du carter central de ce dernier.

De plus, le système de montage comprend un dispositif de reprise des efforts de poussée générés par le moteur. Dans l'art antérieur, ce dispositif prend par exemple la forme de deux bielles latérales raccordées d'une part à une partie arrière du carter de soufflante du moteur, et d'autre part à une attache montée sur la structure rigide du mât, par exemple une attache arrière.

A titre indicatif, il est précisé que le mât d'accrochage est associé à un second système de montage interposé entre ce mât et la voilure de l'aéronef, ce second système étant habituellement composé de deux ou trois attaches.

Enfin, le mât est pourvu d'une structure secondaire assurant la ségrégation et le maintien des systèmes tout en supportant des carénages aérodynamiques.

De façon connue de l'homme du métier, malgré la présence du dispositif de reprise des efforts de poussée, ces efforts de poussée générés par le moteur provoquent habituellement une flexion longitudinale plus ou moins importante de ce dernier, à savoir une flexion résultant d'un couple exercé selon une direction transversale de l'aéronef.

Lorsqu'une telle flexion longitudinale survient, notamment durant les phases de croisière de l'aéronef, on rencontre alors des frottements élevés entre les pales tournantes de compresseur et de turbine, et le carter central du moteur.

De plus, il est noté que le phénomène de flexion longitudinale susmentionné, et donc celui de frottement des pales tournantes, est largement accentué par le fait que sur les turboréacteurs actuels, la recherche d'un taux de dilution toujours plus important amène inéluctablement les concepteurs à augmenter le diamètre de la soufflante par rapport à celui du coeur (de l'anglais « core ») du turboréacteur.

La conséquence principale des frottements rencontrés réside dans une usure prématurée du moteur, qui est naturellement néfaste à la durée de vie de celui-ci, ainsi qu'à ses performances. Dans un autre cas où l'on a prévu des jeux de fonctionnement adaptés de manière à ce qu'il n'y ait quasiment jamais de contact causé par la flexion longitudinale, le rendement du moteur est alors fortement diminué.

Ainsi, pour faire face à ce problème, il a été proposé de mettre en oeuvre une pluralité d'attaches moteur comprenant une première attache moteur avant et une seconde attache moteur avant fixées au carter de soufflante du moteur et situées de façon symétrique par rapport à un plan défini par un axe longitudinal du turboréacteur et une direction verticale de celui-ci, les première et seconde attaches moteur avant étant chacune conçues de manière à reprendre des efforts s'exerçant selon une direction longitudinale du turboréacteur et selon la direction verticale de celui-ci.

Le fait de prévoir les première et seconde attaches moteur avant sur le carter de soufflante offre la possibilité de les écarter fortement les unes des autres. Cet écartement important a pour avantage de pouvoir diminuer considérablement le dimensionnement de ces attaches moteur, en raison du fait que les efforts qu'elles doivent reprendre, associés à un moment selon un axe donné, sont naturellement affaiblis par rapport à ceux rencontrés dans les solutions classiques dans lesquelles les attaches moteur situées sur le carter central ne pouvaient pas être aussi éloignées les unes des autres.

D'autre part, avec une telle disposition qui ne requiert d'ailleurs plus la présence d'un dispositif de reprise des efforts de poussée du type à bielles latérales, la reprise de l'ensemble des efforts générés par le turboréacteur s'effectue essentiellement sur le carter de soufflante à l'aide des première et seconde attaches moteur avant, car l'unique liaison conservée entre le mât et le carter central ou le carter d'éjection est de préférence constituée par l'attache moteur arrière, dont le rôle principal est de limiter les oscillations verticales de la partie arrière du turboréacteur.

Ainsi, cette disposition particulière des attaches moteur induit une diminution considérable de la flexion rencontrée au niveau du carter central, que cette flexion soit due aux efforts de poussée générés par le turboréacteur, ou bien due aux rafales susceptibles d'être rencontrées durant les diverses phases de vol de l'aéronef.

Par conséquent, la diminution de flexion susvisée engendre une baisse significative des frottements entre les pales tournantes de compresseur et de turbine et le carter central du moteur, et limite donc grandement les pertes de rendement dues à l'usure de ces pales.

Néanmoins, il est noté que jusqu'à présent, aucune conception ne s'est révélée totalement satisfaisante pour les première et seconde attaches moteur avant, dites attaches avant latérales. En effet, les problèmes rencontrés dans les solutions connues sont essentiellement constitués d'une part par un fort encombrement de ces attaches, notamment en raison de l'emploi d'un assemblage du type chape/manille, et d'autre part par la présence d'un phénomène de flexion très important au niveau d'un pion de cisaillement orienté transversalement et monté sur le carter de soufflante du turboréacteur, ainsi que sur ladite manille de l'assemblage.

Le document US-A-5 497 961 montre un ensemble moteur selon le préambule de la revendication 1.

### EXPOSÉ DE L'INVENTION

L'invention a donc pour but de proposer un ensemble pour aéronef remédiant au moins partiellement aux inconvénients mentionnés ci-dessus relatifs aux réalisations de l'art antérieur, et également de présenter un aéronef disposant d'au moins un tel ensemble.

Pour ce faire, l'invention a pour objet un ensemble moteur pour aéronef comprenant un turboréacteur, un mât d'accrochage ainsi qu'une pluralité d'attaches moteur interposées entre le mât d'accrochage et le turboréacteur, la pluralité d'attaches moteur comprenant une première attache moteur avant et une seconde attache moteur avant fixées au carter de soufflante du turboréacteur et situées de façon symétrique par rapport à un plan défini par un axe longitudinal du turboréacteur et une direction verticale de celui-ci, ces première et seconde attaches moteur avant étant chacune conçues de manière à reprendre des efforts s'exerçant selon une direction longitudinale du turboréacteur et selon la direction verticale de celui-ci, et comportant chacune un pion de cisaillement orienté selon une direction transversale du turboréacteur et monté sur le carter de soufflante, ainsi qu'une chape montée fixement sur le mât d'accrochage et disposant de deux flancs. Selon l'invention, pour chacune des première et seconde attaches moteur avant, le pion de cisaillement traverse les deux flancs de la chape.

Par conséquent, avec un tel agencement, les première et seconde attaches moteur avant disposent d'une grande compacité, car il n'est plus requis de manille coopérant avec la chape comme cela était le cas dans les réalisations de l'art antérieur, puisque c'est à présent le pion de cisaillement qui coopère directement avec cette même chape. Ainsi, outre le gain en terme de compacité des attaches avant, il est également obtenu un gain de masse et de coût.

Par ailleurs, le pion traverse donc les deux flancs de la chape qui sont situés à distance l'un de l'autre, selon la direction transversale. Le pion de cisaillement est de ce fait sollicité par deux efforts de sens opposés respectivement au niveau de ses deux points distincts coopérant avec les flancs de la chape, ce qui permet d'obtenir un équilibrage du pion se traduisant avantageusement par une diminution considérable de l'effet de flexion rencontré antérieurement avec le pion de cisaillement sollicité en un point unique par la manille de l'assemblage chape/manille.

De préférence, l'ensemble moteur comporte en outre une rotule disposant d'un boîtier monté fixement sur le carter de soufflante, et d'une noix de rotule portant le pion de cisaillement. Avec une telle configuration, le pion sollicité mécaniquement en flexion ne transmet avantageusement quasiment aucune contrainte au carter de soufflante, puisque dans un tel cas, c'est la noix de rotule solidaire du pion de cisaillement qui va se déplacer dans son boîtier associé, encastré dans le carter. La présence de la rotule susmentionnée implique donc que le carter de soufflante est sensiblement protégé des effets néfastes susceptibles d'être provoqués par la mise en flexion du pion de cisaillement raccordé mécaniquement à ce même carter.

Toujours de façon préférentielle, le pion de cisaillement est monté coulissant dans la noix de rotule. Ce type de montage présente l'avantage de permettre un déplacement relatif entre le pion et la noix de rotule selon une direction définie par l'axe du pion. Ceci est particulièrement intéressant en ce sens que le moteur peut alors se déformer sans subir de surcontraintes au niveau de sa zone de raccordement avec le pion de cisaillement capable de coulisser dans la rotule. A titre indicatif, cette spécificité est notamment très avantageuse durant les phases d'ovalisation du moteur, qui entraînent un écartement non négligeable entre le carter de soufflante et la chape de chaque attache moteur avant latérale.

De préférence, la pluralité d'attaches comporte également une attache moteur arrière conçue de manière à reprendre des efforts s'exerçant selon la direction verticale du turboréacteur. Cette attache moteur arrière est alors préférentiellement conçue de manière à reprendre uniquement les efforts s'exerçant selon la direction verticale du turboréacteur, et la pluralité d'attaches moteur comprend en outre une troisième attache moteur avant fixée au carter de soufflante de manière à être traversée par le plan précité défini par l'axe longitudinal du turboréacteur et la direction verticale de celui-ci, la troisième attache moteur avant étant conçue de manière à reprendre uniquement les efforts s'exerçant selon la direction transversale du turboréacteur.

Dans cette configuration, on peut alors prévoir que les première, seconde et troisième attaches moteur avant sont fixées sur une partie annulaire périphérique du carter de soufflante, ce qui leur permet d'occuper des positions dans lesquelles elles sont avantageusement très éloignées les unes des autres.

Préférentiellement, les première et seconde attaches moteur avant sont traversées par un plan défini par l'axe longitudinal du turboréacteur et une direction transversale de celui-ci. Ainsi, la reprise de efforts s'effectuant au niveau de l'axe du turbomoteur, la flexion longitudinale de ce dernier est avantageusement considérablement diminuée.

Enfin, il est noté qu'une alternative consiste à prévoir que la pluralité d'attaches ne comprend pas la troisième attache avant précitée, mais que l'attache moteur arrière est conçue de manière à également reprendre des efforts s'exerçant selon une direction transversale du turboréacteur, toujours dans le but d'obtenir une pluralité d'attaches moteur formant un système de montage isostatique et dépourvu de dispositif de reprise des efforts de poussée du type à bielles latérales de reprise.

L'invention a également pour objet un aéronef comprenant au moins un ensemble moteur tel que celui qui vient d'être présenté.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique de côté d'un ensemble moteur pour aéronef, selon un premier mode de réalisation préféré de la présente invention ;
- la figure 2 représente une vue schématique en perspective du turboréacteur de l'ensemble représenté sur la figure 1, le mât d'accrochage ayant été retiré pour laisser plus clairement apparaître la disposition des attaches moteur ;
- la figure 3 représente une vue similaire à celle montrée sur la figure 2, l'ensemble se présentant sous la forme d'un second mode de réalisation préféré de la présente invention ;
- la figure 4 représente une vue en perspective du mât d'accrochage de l'ensemble montré sur la figure 1 ;
- la figure 5 représente une vue détaillée en perspective d'une attache avant appartenant à l'ensemble moteur montré sur la figure 1 ; et
- la figure 6 représente une vue partielle en coupe de cette même attache avant, prise selon le plan P' de la figure 5.

### EXPOSÉ DÉTAILLÉ DE MODES DE RÉALISATION PRÉFÉRÉS

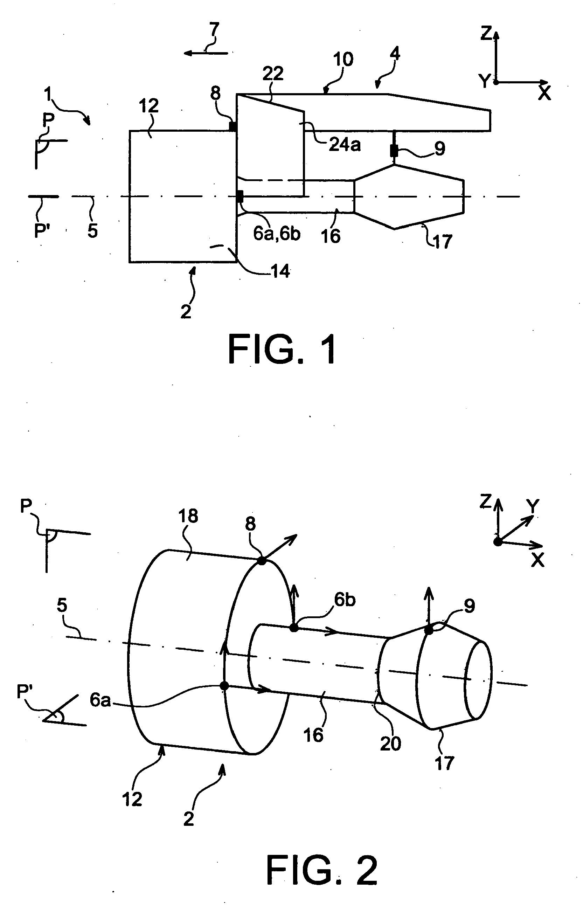

En référence à la figure 1, on voit un ensemble moteur 1 pour aéronef selon un premier mode de réalisation préféré de la présente invention, cet ensemble 1 étant destiné à être fixé sous une aile d'aéronef (non représenté).

Globalement, l'ensemble moteur 1 comporte un turboréacteur 2, un mât d'accrochage 4, ainsi qu'une pluralité d'attaches moteur 6a, 6b, 8, 9 assurant la fixation du turboréacteur 2 sous ce mât 4 (l'attache 6b étant masquée par l'attache 6a sur cette figure 1). A titre indicatif, il est noté que l'ensemble 1 est destiné à être entouré d'une nacelle (non représentée), et que le mât d'accrochage 4 comporte une autre série d'attaches (non représentées) permettant d'assurer la suspension de cet ensemble 1 sous la voilure de l'aéronef.

Dans toute la description qui va suivre, par convention, on appelle X la direction parallèle à un axe longitudinal 5 du turboréacteur 2, Y la direction orientée transversalement par rapport à ce même turboréacteur 2, et Z la direction verticale ou de la hauteur, ces trois directions étant orthogonales entre-elles.

D'autre part, les termes « avant » et « arrière » sont à considérer par rapport à une direction d'avancement de l'aéronef rencontrée suite à la poussée exercée par le turboréacteur 2, cette direction étant représentée schématiquement par la flèche 7.

Sur la figure 1, on peut voir que seule une structure rigide 10 du mât d'accrochage 4 a été représentée. Les autres éléments constitutifs non représentés de ce mât 4, tels que la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

D'autre part, le turboréacteur 2 dispose à l'avant d'un carter de soufflante 12 de grande dimension délimitant un canal annulaire de soufflante 14, et comporte vers l'arrière un carter central 16 de plus petite dimension, renfermant le coeur de ce turboréacteur. Enfin, le carter central 16 se prolonge vers l'arrière par un carter d'éjection 17 de plus grande dimension que celle du carter 16. Les carters 12, 16 et 17 sont bien entendu solidaires les uns des autres.

Comme on peut l'apercevoir sur la figure 1, une première attache moteur avant 6a ainsi qu'une seconde attache moteur avant 6b sont toutes les deux fixées sur le carter de soufflante 12, de façon symétrique par rapport à un plan P défini par l'axe 5 et la direction Z.

En effet, en référence à présent à la figure 2, on peut voir que la première attache 6a et la seconde attache 6b représentées schématiquement sont disposées de façon symétrique par rapport à ce plan P, et de préférence agencées toutes les deux sur une partie annulaire périphérique du carter de soufflante 12, et plus précisément sur l'arrière de cette même partie.

On peut alors prévoir que les première et seconde attaches moteur avant 6a, 6b sont diamétralement opposées sur la partie annulaire périphérique présentant une surface externe cylindrique 18 du carter de soufflante 12, de sorte que ces attaches 6a, 6b sont donc chacune traversées par un second plan P' défini par l'axe longitudinal 5 et la direction Y.

Comme cela est montré schématiquement par les flèches de la figure 2, chacune des première et seconde attaches moteur avant 6a, 6b est conçue de manière à pouvoir reprendre des efforts générés par le turboréacteur 2 selon la direction X et selon la direction Z, mais pas ceux s'exerçant selon la direction Y.

De cette manière, les deux attaches 6a, 6b fortement éloignées l'une de l'autre assurent conjointement la reprise du moment s'exerçant selon la direction X, et celle du moment s'exerçant selon la direction Z.

Toujours en référence à la figure 2, on peut voir une troisième attache moteur avant 8 représentée schématiquement et aussi fixée sur la partie annulaire périphérique du carter de soufflante 12, également de préférence sur l'arrière de cette partie.

Les attaches 6a, 6b, 8 sont fixées sur la partie annulaire périphérique du carter 12 par l'intermédiaire de parties structurales (non représentées) du moteur, qui sont effectivement de préférence agencées sur l'arrière de la partie annulaire périphérique. Néanmoins, il est également possible de rencontrer des moteurs dont les parties structurales sont situées plus vers l'avant sur la partie annulaire périphérique, impliquant que les attaches 6a, 6b, 8 sont elles aussi fixées plus vers l'avant du moteur, toujours sur la partie annulaire périphérique du carter de soufflante 12.

En ce qui concerne la troisième attache 8, celle-ci se situe sur la partie la plus haute du carter de soufflante 12, donc sur la partie la plus haute de la partie annulaire périphérique, et est par conséquent traversée fictivement par le premier plan P indiqué ci-dessus. En outre, les trois attaches 6a, 6b et 8 sont préférentiellement traversées par un plan YZ (non représenté).

Comme cela est montré schématiquement par les flèches de la figure 2, la troisième attache moteur 8 est conçue de manière à pouvoir reprendre uniquement des efforts générés par le turboréacteur 2 selon la direction Y, et donc pas ceux s'exerçant selon les directions X et Z.

Toujours en référence à la figure 2, on peut voir une attache moteur arrière 9 représentée schématiquement, et fixée entre la structure rigide 10 (non visible sur cette figure) et le carter d'éjection 17, de préférence au niveau de la portion de ce carter 17 ayant le plus grand diamètre. A titre indicatif, il est précisé que cette attache arrière 9 est de préférence traversée fictivement par le premier plan P.

Comme cela est montré schématiquement par les flèches de la figure 2, l'attache moteur arrière 9 est conçue de manière à pouvoir reprendre uniquement des efforts générés par le turboréacteur 2 selon la direction Z, et donc pas ceux s'exerçant selon les directions X et Y.

De cette manière, cette attache 9 assure donc conjointement avec les deux attaches avant 6a, 6b la reprise du moment s'exerçant selon la direction Y.

Naturellement, cette attache arrière 9 pourrait être placée différemment, à savoir sur le carter central 16 du turbomoteur 2, de préférence sur une partie arrière de celui-ci, ou encore au niveau d'une jonction 20 entre le carter central 16 et le carter d'éjection 17.

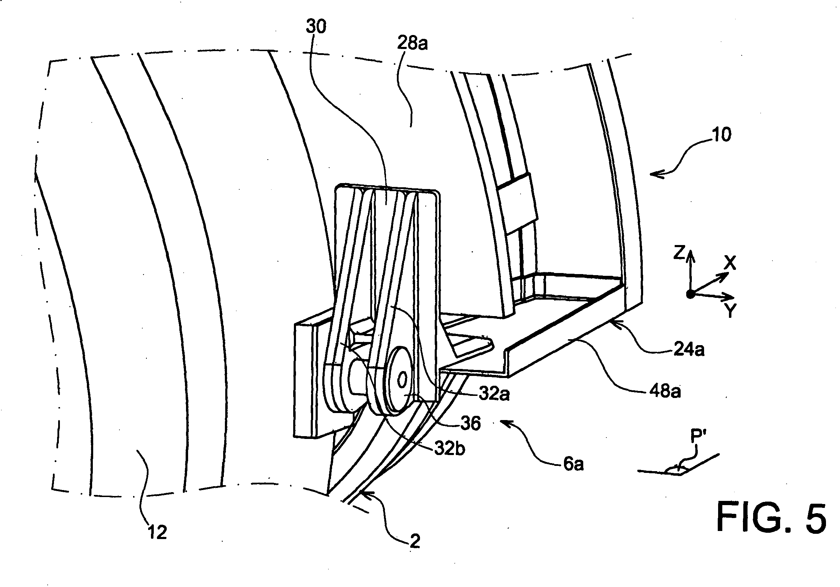

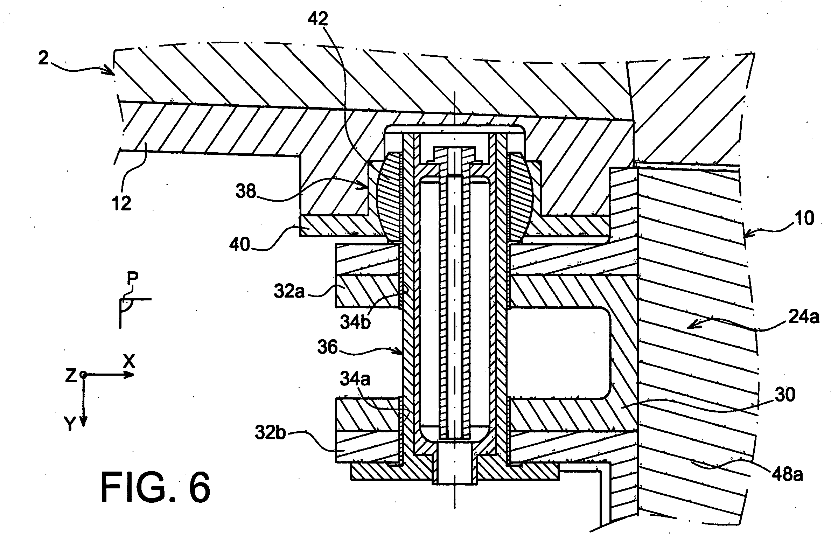

Il est noté que si les attaches moteur 8 et 9 ont été représentées de façon schématique sur les figures 1 et 2, il est à comprendre que ces attaches peuvent être réalisées selon toute forme connue de l'homme du métier, telle que par exemple celle relative à l'assemblage de manilles et de ferrures. En revanche, la conception des attaches avant 6a, 6b constitue une particularité de la présente invention, et sera détaillée ci-après en référence aux figures 5 et 6.

Comme cela a été évoqué précédemment, un des avantages principaux associés à la configuration qui vient d'être décrite réside dans le fait que la position spécifique des attaches moteur avant 6a, 6b, 8 sur le carter de soufflante 12 entraîne une diminution considérable de la flexion du carter central 16 durant les diverses situations de vol de l'aéronef, et provoque donc une baisse significative de l'usure par frottement des pales de compresseur et de turbine contre ce carter central 16. Par ailleurs, un autre avantage réside dans la possibilité de diminuer les jeux de fonctionnement lors de la fabrication du moteur, et donc d'obtenir un meilleur rendement.

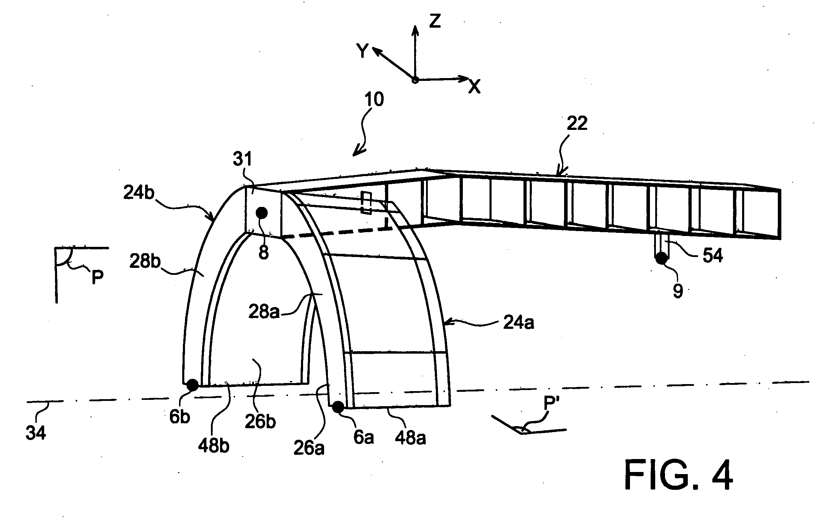

En référence à la figure 4, on peut voir un exemple de réalisation du mât d'accrochage, dont seule la structure rigide 10 a été représentée.

Tout d'abord, il est indiqué que cette structure rigide 10 est conçue de manière à présenter une symétrie par rapport au premier plan P indiqué ci-dessus.

Cette structure rigide 10 comporte un caisson central de torsion 22, qui s'étend d'un bout à l'autre de la structure 10 dans la direction X, sensiblement parallèlement à cette même direction. A titre indicatif, ce caisson 22 peut être formé par l'assemblage d'un longeron supérieur, d'un longeron inférieur, et de deux panneaux latéraux (non référencés) s'étendant selon la direction X dans des plans XZ parallèles, raccordés entre eux par l'intermédiaire de nervures transversales (non référencées) qui sont quant à elles orientées dans des plans YZ parallèles.

Par ailleurs, au niveau d'une extrémité avant de ce caisson 22, la structure rigide 10 porte deux caissons latéraux 24a, 24b faisant saillie de part et d'autre du caisson 22 selon la direction Y.

Les deux caissons latéraux 24a, 24b portent respectivement les deux attaches moteur avant 6a, 6b, et disposent de préférence chacun d'une peau inférieure 26a, 26b délimitant conjointement une partie d'une surface fictive (non représentée) sensiblement cylindrique de section circulaire, et d'axe longitudinal 34 parallèle au caisson central 22 et à l'axe longitudinal 5 du turbomoteur. En d'autres termes, les deux peaux inférieures 26a, 26b disposent chacune d'une courbure adaptée pour pouvoir se positionner autour et au contact de cette surface fictive, sur toute leur longueur. Ainsi, d'une manière générale, les deux caissons latéraux 24a, 24b forment une portion d'une enveloppe/cage sensiblement cylindrique de section circulaire, susceptible d'être positionnée autour et à distance du carter central 16 du turboréacteur 2. Bien entendu, cette configuration favorise l'écoulement du flux d'air secondaire à travers l'ensemble 1.

Par ailleurs, on peut noter que l'attache moteur avant 6a est solidarisée à un cadre de fermeture avant 28a du caisson latéral 24a, tandis que l'attache moteur avant 6b est solidarisée à un cadre de fermeture avant 28b du caisson latéral 24b, comme cela est représenté schématiquement sur la figure 4 montrant également que l'attache moteur avant 8 est montée sur un cadre de fermeture avant 31 du caisson 22, les cadres 28a, 28b, 31 étant agencés dans un même plan YZ.

Par ailleurs, on prévoit également de fixer les attaches moteur avant 6a, 6b respectivement sur des plaques de fermeture 48a, 48b parallèles au plan P' et de préférence traversées par ce même plan, ces plaques de fermeture 48a, 48b venant respectivement fermer une partie inférieure du caisson 24a et une partie inférieure du caisson 24b, et reliant donc les extrémités inférieures des peaux et des cadres de fermeture avant et arrière du caisson associé.

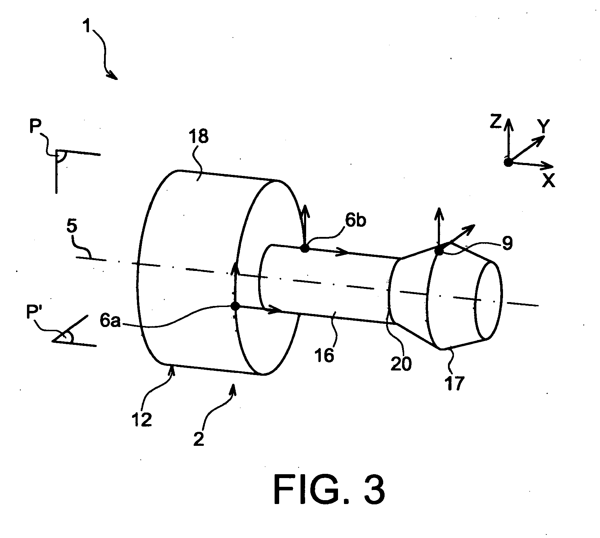

En référence à la figure 3, on peut voir un ensemble moteur 1 pour aéronef selon un second mode de réalisation préféré de la présente invention (le mât d'accrochage n'étant pas représenté).

Cet ensemble est similaire à celui décrit dans le cadre du premier mode de réalisation préféré. Ainsi, les éléments portant les mêmes références numériques correspondent à des éléments identiques ou similaires.

La principale différence présentée par ce second mode de réalisation préféré consiste à supprimer la troisième attache moteur avant, et à prévoir que l'attache moteur arrière 9 assure non seulement la reprise de l'effort s'exerçant selon la direction Z, mais également celle de l'effort s'exerçant selon la direction Y.

Ainsi, ce second mode de réalisation préféré, tout comme le premier, procure une alternative permettant d'obtenir une pluralité d'attaches moteur formant un système de montage isostatique.

En référence à présent aux figures 5 et 6 représentant l'attache moteur avant latérale 6a, identique et bien entendu symétrique à l'attache moteur avant latérale 6b par rapport au plan P, on peut voir que celle-ci comporte une chape 30 solidaire du cadre de fermeture avant 28a et de la plaque de fermeture 48a du caisson latéral 24a, cette chape 30 disposant de deux flancs ou têtes 32a, 32b espacés selon la direction Y, et étant chacune agencée dans un plan XZ.

Les deux flancs présentent chacun un orifice 34a, 34b également orientés selon la direction Y, et qui sont traversés successivement par une extrémité extérieure d'un pion de cisaillement 36. Plus précisément, le pion de cisaillement 36 orienté selon la direction Y est encastré dans les flancs de la chape 30, de sorte qu'il est possible de considérer que le pion 36 est solidaire de cette chape.

Il est précisé que les flancs et le pion de cisaillement peuvent être du type « double », afin de pouvoir remplir une fonction de sécurité, également connue sous l'appellation de fonction « Fail Safe ».

D'autre part, le pion de cisaillement 36 comporte une extrémité intérieure raccordée mécaniquement au carter de soufflante 12, comme cela est le mieux visible sur la figure 6. Le raccordement mécanique s'effectue par l'intermédiaire d'une rotule 38 comportant un boîtier 40 encastré dans le carter 12, et portant une noix de rotule 42 percée afin de recevoir l'extrémité intérieure du pion 36. Ici, en revanche, il est préféré un montage coulissant du pion 36 dans la noix de rotule 42, afin de permettre un déplacement relatif entre ces deux éléments selon la direction définie par les axes longitudinaux confondus du pion 36 et du perçage de la noix 42, correspondant donc à la direction Y.

Bien entendu, diverses modifications peuvent être apportées par l'homme du métier à l'ensemble moteur 1 pour aéronef qui vient d'être décrit, uniquement à titre d'exemple non limitatif. A cet égard, on peut notamment indiquer qui si l'ensemble moteur 1 a été présenté dans une configuration adaptée pour qu'il soit suspendu sous la voilure de l'aéronef, cet ensemble 1 pourrait également se présenter dans une configuration différente lui permettant d'être monté au-dessus de cette même voilure, voire en partie arrière du fuselage de l'aéronef.

## Revendications

1. Ensemble moteur (1) pour aéronef comprenant un turboréacteur (2), un mât d'accrochage (4) ainsi qu'une pluralité d'attaches moteur (6a, 6b, 8, 9) interposées entre ledit mât d'accrochage (4) et le turboréacteur (2), ladite pluralité d'attaches moteur (6a, 6b, 8, 9) comprenant une première attache moteur avant (6a) et une seconde attache moteur avant (6b) fixées au carter de soufflante (12) du turboréacteur et situées de façon symétrique par rapport à un plan défini par un axe longitudinal (5) du turboréacteur et une direction verticale (Z) de celui-ci, lesdites première et seconde attaches moteur avant (6a, 6b) étant chacune conçues de manière à reprendre des efforts s'exerçant selon une direction longitudinale (X) du turboréacteur (2) et selon la direction verticale (Z) de celui-ci, et comportant chacune un pion de cisaillement (36) orienté selon une direction transversale (Y) du turboréacteur (2) et monté sur ledit carter de soufflante (12), **caractérisé en ce que** lesdites première et seconde attaches moteur avant (6a, 6b) comportent chacune une chape (30) montée fixement sur ledit mât d'accrochage et disposant de deux flancs (32a, 32b), et **en ce que** pour chacune desdites première et seconde attaches moteur avant (6a, 6b), ledit pion de cisaillement (36) traverse les deux flancs (32a, 32b) de ladite chape (30).

2. Ensemble (1) pour aéronef selon la revendication 1, **caractérisé en ce qu'**il comporte en outre une rotule (38) disposant d'un boîtier (40) monté fixement sur ledit carter de soufflante (12), et d'une noix de rotule (42) portant ledit pion de cisaillement (36) .

3. Ensemble (1) pour aéronef selon la revendication 2, **caractérisé en ce que** ledit pion de cisaillement (36) est monté coulissant dans ladite noix de rotule (42).

4. Ensemble (1) pour aéronef selon l'une quelconque des revendications précédentes, **caractérisé en ce que** ladite pluralité d'attaches (6a, 6b, 8, 9) comporte également une attache moteur arrière (9) conçue de manière à reprendre des efforts s'exerçant selon la direction verticale (Z) du turboréacteur (2).

5. Ensemble (1) pour aéronef selon la revendication 4, **caractérisé en ce que** ladite attache moteur arrière (9) est conçue de manière à reprendre uniquement les efforts s'exerçant selon la direction verticale (Z) du turboréacteur (2), et **en ce que** ladite pluralité d'attaches moteur (6a, 6b, 8, 9) comprend en outre une troisième attache moteur avant (8) fixée au carter de soufflante (12) de manière à être traversée par ledit plan défini par l'axe longitudinal (5) du turboréacteur (2) et la direction verticale (Z) de celui-ci, ladite troisième attache moteur avant (9) étant conçue de manière à reprendre uniquement les efforts s'exerçant selon la direction transversale (Y) du turboréacteur (2).

6. Ensemble (1) pour aéronef selon la revendication 5, **caractérisé en ce que** les première, seconde et troisième attaches moteur avant (6a, 6b, 8) sont fixées sur une partie annulaire périphérique (18) du carter de soufflante (12).

7. Ensemble (1) pour aéronef selon l'une quelconque des revendications précédentes, **caractérisé en ce que** les première et seconde attaches moteur avant (6a, 6b) sont traversées par un plan défini par l'axe longitudinal (5) du turboréacteur (2) et une direction transversale (Y) de celui-ci.

8. Ensemble (1) pour aéronef selon la revendication 4, **caractérisé en ce que** ladite attache moteur arrière (9) est conçue de manière à également reprendre des efforts s'exerçant selon une direction transversale (Y) du turboréacteur (2).

9. Ensemble (1) pour aéronef selon l'une quelconque des revendications précédentes, **caractérisé en ce que** ladite attache moteur arrière (9) est fixée sur un carter central (16) du turboréacteur (2).

10. Ensemble (1) pour aéronef selon l'une quelconque des revendications précédentes, **caractérisé en ce que** ladite pluralité d'attaches moteur (6a, 6b, 8, 9) forme un système de montage isostatique.

11. Aéronef **caractérisé en ce qu'**il comprend au moins un ensemble moteur (1) selon l'une quelconque des revendications précédentes.

## Claims

1. An aircraft engine assembly (1) comprising a turbojet engine (2), an engine mount (4) and a plurality of engine attachments (6a, 6b, 8, 9) inserted between said engine mount (4) and the turbojet engine (2), said plurality of engine attachments (6a, 6b, 8, 9) comprising a first forward engine attachment (6a) and a second forward engine attachment (6b) fixed to the fan case (12) of the turbojet engine and located symmetrically in relation to a plane defined by a longitudinal axis (5) of the turbojet engine and a vertical direction (Z) thereof, said first and second forward engine attachments (6a, 6b) each being designed so as to transfer loads exerted in a longitudinal direction (X) of the turbojet engine (2) and in the vertical direction (Z) thereof, and each comprising a shear pin (36) oriented in a transverse direction (Y) of the turbojet engine (2) and mounted on said fan case (12), **characterized in that** said first and second forward engine attachments (6a, 6b) each comprises a clevis (30) fixed on said engine mount and having two walls (32a, 32b), and **in that** for each of said first and second forward engine attachments (6a, 6b), said shear pin (36) goes through both walls (32a, 32b) of said clevis (30).

2. The aircraft assembly (1) according to claim 1, **characterized in that** it also comprises a ball joint (38) having a casing (40) fixed on said fan case (12), and a ball-joint yoke (42) supporting said shear pin (36).

3. The aircraft assembly (1) according to claim 2, **characterized in that** said shear pin (36) is slidingly mounted in said ball-joint yoke (42).

4. The aircraft assembly (1) according to one of the preceding claims, **characterized in that** said plurality of attachments (6a, 6b, 8, 9) also comprises an aft engine attachment (9) designed so as to transfer loads exerted in the vertical direction (2) of the turbojet engine (2).

5. The aircraft assembly (1) according to claim 4, **characterized in that** said aft engine attachment (9) is designed so as to transfer only the loads exerted in the vertical direction (Z) of the turbojet engine (2), and **in that** said plurality of engine attachments (6a, 6b, 8, 9) also comprises a third forward engine attachment (8) fixed to the fan case (12) so as to be passed through by said plane defined by the longitudinal axis (5) of the turbojet engine (2) and the vertical direction (Z) thereof, said third forward engine attachment (9) being designed so as to transfer only the loads exerted in the transverse direction (Y) of the turbojet engine (2).

6. The aircraft assembly (1) according to claim 5, **characterized in that** the first, second and third forward engine attachments (6a, 6b, 8) are fixed on a peripheral annular part (18) of the fan case (12).

7. The aircraft assembly (1) according to one of the preceding claims, **characterized in that** the first and second forward engine attachments (6a, 6b) are passed through by a plane defined by the longitudinal axis (5) of the turbojet engine (2) and a transverse direction (Y) thereof.

8. The aircraft assembly (1) according to claim 4, **characterized in that** said aft engine attachment (9) is designed so as also to transfer the loads exerted in a transverse direction (Y) of the turbojet engine (2).

9. The aircraft assembly (1) according to one of the preceding claims, **characterized in that** said aft engine attachment (9) is fixed on a central case (16) of the turbojet engine (2).

10. The aircraft assembly (1) according to one of the preceding claims, **characterized in that** said plurality of engine attachments (6a, 6b, 8, 9) forms an isostatic assembly system.

11. An aircraft **characterized in that** it comprises at least one engine assembly (1) according to one of the preceding claims.

## Patentansprüche

1. Triebwerksystem (1) für ein Flugzeug, mit einem Turboluftstrahltriebwerk (2), einer Montagestruktur (4) sowie mehreren Triebwerkbefestigungen (6a,6b,8,9), die zwischen der Montagestruktur (4) und dem Turboluftstrahltriebwerk (2) angebracht sind, wobei die mehreren Triebwerkbefestigungen (6a,6b,8,9) eine erste vordere Triebwerkbefestigung (6a) und eine zweite vordere Triebwerkbefestigung (6b), die am Verdichtergehäuse (12) des Turboluftstrahltriebwerks befestigt sind und in Bezug auf eine Ebene, die durch eine Längsachse (5) des Luftstrahltriebwerks und eine Vertikalrichtung (Z) desselben festgelegt ist, symmetrisch angeordnet sind, umfassen, wobei die erste und zweite vordere Triebwerkbefestigung (6a,6b) derart gestaltet sind, dass sie in Längsrichtung (X) des Turboluftstrahltriebwerks (2) und in der Vertikalrichtung (Z) desselben ausgeübte Kräfte aufnehmen, und jeweils einen Kreuzungszapfen (36) umfassen, der in einer Querrichtung (Y) des Turboluftstrahltriebwerks (2) ausgerichtet und an dem Verdichtergehäuse (12) angebracht ist, **dadurch gekennzeichnet, dass** die erste und zweite vordere Triebwerkbefestigung (6a,6b) jeweils ein Ansatzteil (30) umfassen, das fest an der Montagestruktur angebracht ist und zwei Flanken (32a,32b) aufweist, und dass sich bei jeder der ersten und zweiten vorderen Triebwerkbefestigungen (6a,6b) der Kreuzungszapfen (36) durch die zwei Flanken (32a,32b) des Ansatzteils (30) erstreckt.

2. System (1) für ein Flugzeug nach Anspruch 1, **dadurch gekennzeichnet, dass** es ferner ein Kugelgelenk (38) umfasst, das ein fest an dem Verdichtergehäuse (12) angebrachtes Gehäuse (40) und einen den Kreuzungszapfen (36) tragenden Kugelgelenkeinsatz (42) aufweist.

3. System (1) für ein Flugzeug nach Anspruch 2, **dadurch gekennzeichnet, dass** der Kreuzungszapfen (36) in dem Kugelgelenkeinsatz (42) verschiebbar angebracht ist.

4. System (1) für ein Flugzeug nach einem der vorhergehenden Ansprüche, **dadurch gekennzeichnet, dass** die mehreren Befestigungen (6a,6b,8,9) auch eine hintere Triebwerkbefestigung (9) umfassen, die derart gestaltet ist, dass sie in der Vertikalrichtung (Z) des Turboluftstrahltriebwerks (2) ausgeübte Kräfte aufnimmt.

5. System (1) für ein Flugzeug nach Anspruch 4, **dadurch gekennzeichnet, dass** die hintere Triebwerkbefestigung (9) derart gestaltet ist, dass sie nur die in der Vertikalrichtung (Z) des Turboluftstrahltriebwerks (2) ausgeübten Kräfte aufnimmt, und dass die mehreren Triebwerkbefestigungen (6a,6b,8,9) ferner eine dritte vordere Triebwerkbefestigung (8) umfassen, die an dem Verdichtergehäuse (12) derart befestigt ist, dass sie von der Ebene, die durch die Längsachse (5) des Turboluftstrahltriebwerks (12) und die Vertikalrichtung (Z) desselben festgelegt ist, durchlaufen wird, wobei die dritte vordere Triebwerkbefestigung (9) derart gestaltet ist, dass sie nur die in der Querrichtung (Y) des Turboluftstrahltriebwerks (2) ausgeübten Kräfte aufnimmt.

6. System (1) für ein Flugzeug nach Anspruch 5, **dadurch gekennzeichnet, dass** die erste, zweite und dritte vordere Triebwerkbefestigung (6a,6b,8) an einem ringförmigen Umfangsteil (18) des Verdichtergehäuses (12) befestigt sind.

7. System (1) für ein Flugzeug nach einem der vorhergehenden Ansprüche, **dadurch gekennzeichnet, dass** die erste und zweite vordere Triebwerkbefestigung (6a,6b) von einer Ebene, die durch die Längsachse (5) des Turboluftstrahltriebwerks (2) und eine Querrichtung (Y) desselben festgelegt ist, durchlaufen werden.

8. System (1) für ein Flugzeug nach Anspruch 4, **dadurch gekennzeichnet, dass** die hintere Triebwerkbefestigung (9) derart gestaltet ist, dass sie auch in einer Querrichtung (Y) des Turboluftstrahltriebwerks (2) ausgeübte Kräfte aufnimmt.

9. System (1) für ein Flugzeug nach einem der vorhergehenden Ansprüche, **dadurch gekennzeichnet, dass** die hintere Triebwerkbefestigung (9) an einem zentralen Gehäuse (16) des Turboluftstrahltriebwerks (2) befestigt ist.

10. System (1) für ein Flugzeug nach einem der vorhergehenden Ansprüche, **dadurch gekennzeichnet, dass** die mehreren Triebwerkbefestigungen (6a,6b,8,9) ein isostatisches Montagesystem bilden.

11. Flugzeug, **dadurch gekennzeichnet, dass** es mindestens ein Triebwerksystem (1) nach einem der vorhergehenden Ansprüche umfasst.
